# FASCICULE DE BREVET EUROPEEN

(11) **EP 0 932 315 B1**
(45) Date de publication et mention de la délivrance du brevet: **11.05.2005**
(21) Numéro de dépôt: 99400160.0
(22) Date de dépôt: 25.01.1999
(51) Int. Cl.: H04Q 7/20

(54) **Dispositif pour relier un commutateur téléphonique à un réseau téléphonique fixe via une pluralité de terminaux radiotéléphoniques fixes**
Vorrichtung zur Erkennung eines gerufenen Endgeräts aus mehreren Teilnehmerendgeräten einer Fernsprechvermittlung, wobei die Fernsprechvermittlung mit mindestens einem festen Funkfernsprechendgerät verbunden ist
Device for identifying a called terminal from a plurality of user terminals connected to a telephone network switch, whereby the telephone network switch is connected to at least one fixed radiotelephone terminal

(30) Priorité: 26.01.1998 FR 9800768
(43) Date de publication de la demande: 28.07.1999
(73) Titulaire: ALCATEL, 75008 Paris (FR)
(72) Inventeur: Charpentier, Jean, 78220 Viroflay (FR); Issenmann, Edouard, 78150 Le Chesnay (FR)
(74) Mandataire: Sciaux, Edmond

(56) Documents cités:
- WO-A-95/29565
- WO-A-96/24225
- US-A- 5 544 227
- US-A- 5 596 624

## Description

L'invention concerne un dispositif pour relier un commutateur téléphonique à un réseau téléphonique fixe via un réseau radiotéléphonique, plusieurs terminaux téléphonique fixes radiotéléphoniques permettant de remplacer une liaison par câble. Chaque terminal radiotéléphonique fixe remplit des fonctions analogues à celles d'un terminal radiotéléphonique portable classique, mais il relie au réseau téléphonique fixe un petit commutateur au lieu de relier un seul usager. Le dispositif selon l'invention peut être utilisé pour relier à un réseau téléphonique publique un petit commutateur desservant un hôtel, ou un village, situé dans une région isolée où la pose d'un câble serait trop coûteuse. Ce commutateur dessert un groupe de terminaux d'usager fixes en assurant le routage des appels arrivant du réseau public. Chaque terminal radiotéléphonique fixe est utilisé successivement pour différents terminaux d'usager, puisque ceux-ci ne sont pas utilisés en permanence. Plusieurs terminaux radiotéléphoniques peuvent se partager une même bande de fréquence grâce à une répartition dans le temps, ou par code.

L'invention concerne plus particulièrement les réseaux radiotéléphoniques de type GSM, et ceux de types dérivés du type GSM qui comporteront un satellite stationnaire ou des satellites à défilement. Les réseaux de type GSM présentent les caractéristiques suivantes :
- Une zone géographique découpée en cellules, pour permettre la réutilisation des fréquences porteuses.
- Une passerelle gère les ressources de chaque cellule, en ce qui concerne les fréquences porteuses et la pluralité de canaux portés par chaque fréquence porteuse.
- Au moins un centre de commutation du service radio mobile gère : les appels, les connexions avec le réseau téléphonique fixe, et des bases de données. Ces dernières contiennent le numéro d'annuaire, le numéro international d'abonné mobile, et la localisation de chaque abonné mobile.

Les réseaux GSM classiques ou dérivés ne sont pas conçus pour que plusieurs abonnés utilisent un même terminal d'usager. L'usager personnalise le terminal qu'il utilise en y insérant une carte d'identification appelée SIM (Subscriber identification module) contenant une identité internationale d'abonné mobile appelée IMSI (international mobile subscriber identity), qui détermine le compte sur lequel seront facturés les appels. Après une phase d'initialisation, ce terminal est désigné dans les messages radio par une identité temporaire d'abonné mobile, appelée TMSI (Temporary mobile subscriber identity), qui permet de protéger l'anonymat de l'usager. D'autre part, une procédure d'authentification utilise une clé secrète contenue dans la carte d'identification SIM, pour empêcher un fraudeur d'utiliser l'identité IMSI ou l'identité TMSI d'un autre usager, lorsqu'un appel est émis et lorsqu'un appel est reçu.

Le document **US 5.596.624** décrit un dispositif pour relier un commutateur téléphonique local à un réseau téléphonique fixe via un réseau radiotéléphonique ; ce dispositif comportant :
- Un commutateur dit mobile relié à ce commutateur local, ce commutateur mobile associant une pluralité d'abonnés, de ce commutateur local, avec des canaux de communication entre le commutateur mobile et un noeud de communication satellitaire.
- Une passerelle dite de destination associée à ce commutateur mobile.
- Une passerelle dite d'origine traduisant un numéro appelé, pour identifier un utilisateur associé au commutateur local, et demander des informations de routage à cette passerelle de destination.
La passerelle de destination choisit un identifiant pour ce numéro appelé. Cet identifiant identifie un canal radio couplant le commutateur mobile avec le système de communication satellitaire, et elle envoie des signaux de signalisation à ce commutateur mobile en identifiant l'usager associé avec ce commutateur local.
Le commutateur mobile attribue ce canal radio et établit une communication avec le commutateur local en utilisant ce numéro appelé.
La passerelle d'origine est associée avec un centre de commutation mobile relié à la passerelle d'origine, pour : traduire ce numéro appelé et obtenir un message d'adresse initiale qui identifie le numéro appelé comme utilisateur associé avec cette passerelle de destination ; traduire ce numéro appelé et obtenir un premier code qui identifie cette passerelle de destination ; et envoyer ce message à un centre de commutation mobile associé avec cette passerelle de destination.
Le centre de commutation mobile identifie ce numéro appelé comme étant associé à ce commutateur local, en utilisant ce message d'adresses initiale , et il traduit ce numéro appelé pour fournir un second code qui identifie un contrôleur de terminal terrestre associé à ce commutateur local.

L'utilisation de plusieurs terminaux radiotéléphoniques fixes pour relier un même commutateur à un réseau GSM pose un problème de coordination de ces terminaux ; et un problème de fourniture, au commutateur, de l'identité de la ligne appelante.

Le but de l'invention est de proposer un dispositif simple qui résolve ce problème.

L'objet de l'invention est un dispositif pour relier un commutateur téléphonique local à un réseau téléphonique fixe via un réseau radiotéléphonique qui comporte un centre de commutation du service mobile et un enregistreur de localisation de visiteur qui est associé à ce centre ;
ce dispositif comportant une pluralité de terminaux radiotéléphoniques fixes pour relier ce commutateur téléphonique local au réseau rodiotéléphonique ; et une pluralité de terminaux d'usager étant reliée à ce commutateur téléphonique ;**caractérisé** en ce qu'il comporte :
- des moyens pour renvoyer un appel destiné à l'un de ces terminaux d'usager et contenant le numéro d'annuaire du terminal d'usager qui est appelé, vers un centre de commutation du service mobile permettant d'accéder au terminal d'usager qui est appelé, l'appel renvoyé contenant un numéro d'annuaire désignant un premier terminal radio fixe associé au numéro d'annuaire du terminal d'usager demandé ; et des moyens situés dans ce centre pour :
   -- si ce premier terminal est occupé, renvoyer cet appel vers un deuxième terminal radio fixe désigné par son numéro international d'abonné mobile, ce numéro étant associé au numéro d'annuaire du terminal d'usager demandé, dans l'enregistreur de localisation de visiteur qui est associé à ce centre ;
   -- et si ce deuxième terminal est occupé, renvoyer cet appel vers un troisième terminal radio fixe désigné par son numéro international d'abonné mobile, ce numéro étant associé au numéro d'annuaire du terminal d'usager demandé, dans l'enregistreur de localisation de visiteur qui est associé à ce centre ; etc..., jusqu'à trouver un terminal radio fixe qui est disponible, s'il y en a un.

   Le dispositif ainsi caractérisé coordonne l'utilisation des terminaux radiotéléphoniques fixes puisqu'il n'appelle qu'un seul terminal radiotéléphonique à la fois. Il renvoie cet appel successivement vers chacun de ces terminaux jusqu'à ce qu'il en trouve un qui soit disponible, mais il n'utilise pas le renvoi classique vers un autre numéro d'annuaire. Si le premier terminal essayé n'est pas libre, Il fait un renvoi conditionnel vers un autre terminal en le désignant par son numéro d'abonné mobile (IMSI, international mobile subscriber identity) obtenu en interrogeant un enregistreur de localisation temporaire (VLR, visitor location register), sans interroger à chaque fois un enregistreur de localisation nominale (HLR, home location register) comme le ferait le procédé classique de renvois conditionnel. Ceci est possible grâce au fait que dans cette application, les terminaux radiotéléphonique sont fixes et restent donc toujours dépendant d'un même enregistreur de localisation temporaire.

La procédure classique d'interrogation de l'enregistreur de localisation nominale pour chaque renvois conditionnel classique, est très coûteuse en temps de traitement. Le dispositif selon l'invention permet donc d'économiser du temps de traitement dans l'enregistreur de localisation nominale, dans l'enregistreur de localisation temporaire, et dans le centre de commutation, pour chaque tentative.

Selon un mode de réalisation préférentiel, les moyens pour renvoyer un appel, destiné à l'un de ces terminaux d'usager comportent des moyens pour envoyer, au centre de commutation du service mobile, un message appelé IAM contenant le numéro d'annuaire du terminal d'usager qui est appelé. Le centre de commutation du service mobile comporte en outre des moyens pour fournir ce numéro d'annuaire au terminal radiotéléphonique dans un message appelé SETUP. Chacun desdits terminaux d'usager fixes comportent des moyens pour extraire du message SETUP, reçu pour l'établissement de chaque appel, le numéro d'annuaire du terminal d'usager qui est appelé, et pour envoyer ce numéro au commutateur sous la forme d'un message de signalisation classique.

Le dispositif ainsi caractérisé permet de réaliser de manière simple la sélection directe à l'arrivée, le commutateur pouvant se comporter comme un commutateur relié à un réseau fixe, pour faire la sélection directe à l'arrivée.

L'invention sera mieux comprise et d'autres caractéristiques apparaîtront à l'aide de la description ci-dessous et des figures l'accompagnant :
- La figure 1 représente le schéma synoptique d'un exemple de réseau de télécommunication comportant le dispositif selon l'invention ;
- La figure 2 représente un diagramme temporel illustrant un procédé pour coordonner et optimiser l'utilisation d'une pluralité de terminaux radiotéléphoniques fixes, en utilisant un dispositif classique de renvois conditionnel, dans l'exemple de réseau représenté sur la figure 1 ;
- La figure 3 représente un diagramme temporel illustrant un procédé pour coordonner et optimiser l'utilisation d'une pluralité de terminaux radiotéléphoniques fixes, en utilisant le dispositif selon l'invention, dans l'exemple de réseau représenté sur la figure 1. Ce diagramme illustre en outre la fourniture de l'identité du terminal d'usager appelé, au terminal radiotéléphonique utilisé.

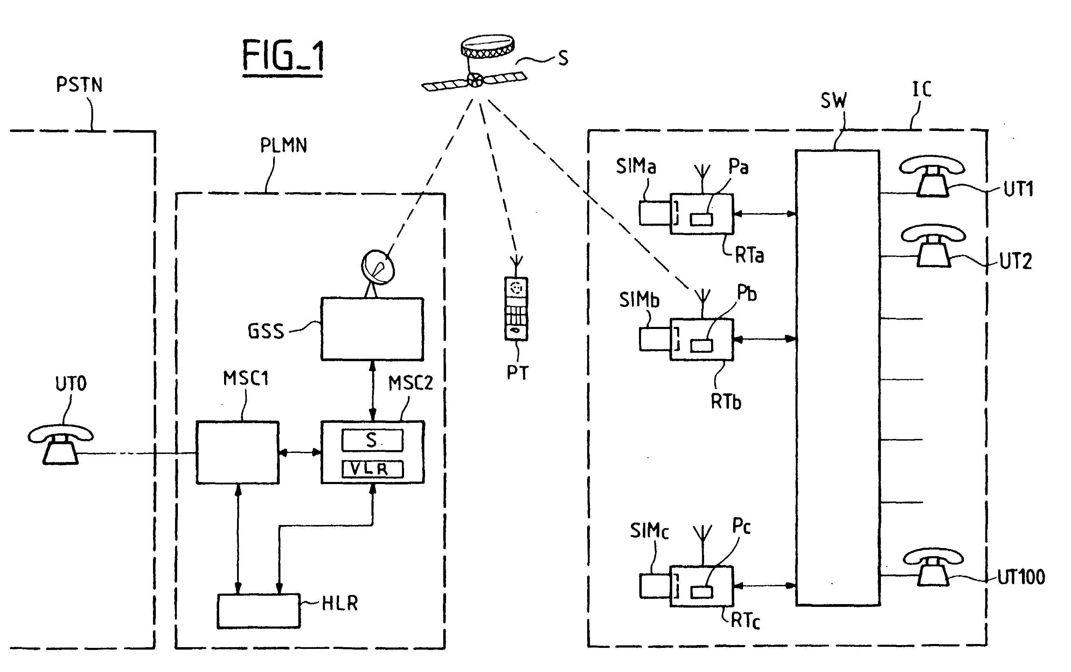

La **figure 1** représente le schéma synoptique d'un exemple de réseau public de télécommunication comportant le dispositif selon l'invention, pour assurer un service de téléphonie à une communauté lC située dans une région isolée. Cette communauté isolée lC est desservie par un petit commutateur privé SW auquel sont reliés cent terminaux téléphoniques classiques UT1,...,UT100, par exemple. Le commutateur SW est relié à un réseau téléphonique commuté national, PSTN (Public switched telephone network), par l'intermédiaire d'un réseau de radiotéléphonie PLMN (Public land mobile network), de type dérivé du type GSM.

Le réseau PLMN comporte un satellite géostationnaire ou plusieurs satellites à défilement, et dessert principalement des terminaux radiotéléphoniques mobiles PT. Un centre de commutation pour le service radio mobile, MSC2, est relié à un satellite S par une passerelle GSS (Gateway subsystem) qui maintient une liaison radio avec le satellite S. Le réseau PLMN comporte notamment deux centres de commutation du service radio mobile, MSC1, MSC2, et une base de données appelée enregistreur de localisation nominale.

Le commutateur SW communique avec le satellite S au moyens de trois terminaux radiotéléphoniques fixes RTa, RTb, RTc. Chaque terminal radiotéléphonique fixe RTa, RTb, RTc est relié par un câble téléphonique classique au commutateur SW ; et comporte un lecteur de carte dans lequel est inséré une carte d'identification SIM1, SlM2, SlM3 respectivement. Chaque terminal radiotéléphonique fixe RTa, RTb, RTc possède respectivement un processeur P1, P2, P3 muni d'un programme qui détermine le fonctionnement de ce terminal. Le fonctionnement est identique à celui d'un terminal radiotéléphonique classique, de type GSM ou dérivé. Un mode de réalisation préférentiel consiste à utiliser de manière fixe un terminal radiotéléphonique classique.

Tous les terminaux d'usager UT1,..., UT100 correspondent respectivement à des abonnements et bénéficient d'un renvois inconditionnel vers la ligne correspondant au terminal radiotéléphonique RTa qui est le premier de la liste des terminaux radiotéléphoniques RTa, RTb, RTc susceptibles d'être utilisés pour acheminer une communication vers ces terminaux d'usager UT1,..., UT100. Si ces abonnement sont du type "abonné radiomobile", les terminaux UT1,..., UT100 ont chacun une identité internationale d'abonné mobile (mais n'a pas de carte SIM, car elle n'est pas utilè à un abonné qui ne se déplace pas). Si ces abonnements sont du type "abonné fixe", les terminaux UT1,..., UT100 ont chacun un classique numéro d'annuaire.

La fonction de sélection directe à l'arrivée est réalisée selon un procédé qui nécessite une modification du logiciel de l'ordinateur qui commande le centre de commutation MSC2 qui dessert les terminaux radiotéléphoniques RTa, RTb, RTc. Lors de l'établissement d'une communication, le centre MSC2 envoie un message appelé SETUP et qui contient, au lieu de contenir le numéro d'annuaire (MSISDNa/b/c) du terminal radio fixe RTa, RTb, ou RTc, conformément aux normes GSM :
- soit le numéro d'annuaire MSISDN (Mobile station's ISDN directory number) du terminal d'usager appelé, s'il a un abonnement du type "abonné radiomobile",
- soit le numéro d'annuaire classique, s'il y a un abonnement du type "abonné fixe".

Le terminal RTa, RTb, ou RTc, qui est en charge d'une communication, retransmet ce numéro d'annuaire au commutateur SW pour que ce dernier puisse sélectionner le terminal d'usager qui est appelé. Le logiciel de chaque terminal RTa, RTb, ou RTc est modifié pour extraire, du message SETUP reçu pour l'établissement de chaque appel, le numéro d'annuaire du terminal d'usager UT1,..., UT100 qui est appelé ; et pour envoyer ce numéro au commutateur SW, sous la forme de messages de signalisation classiques, afin de permettre au commutateur de sélectionner le terminal d'usager, qui est appelé.

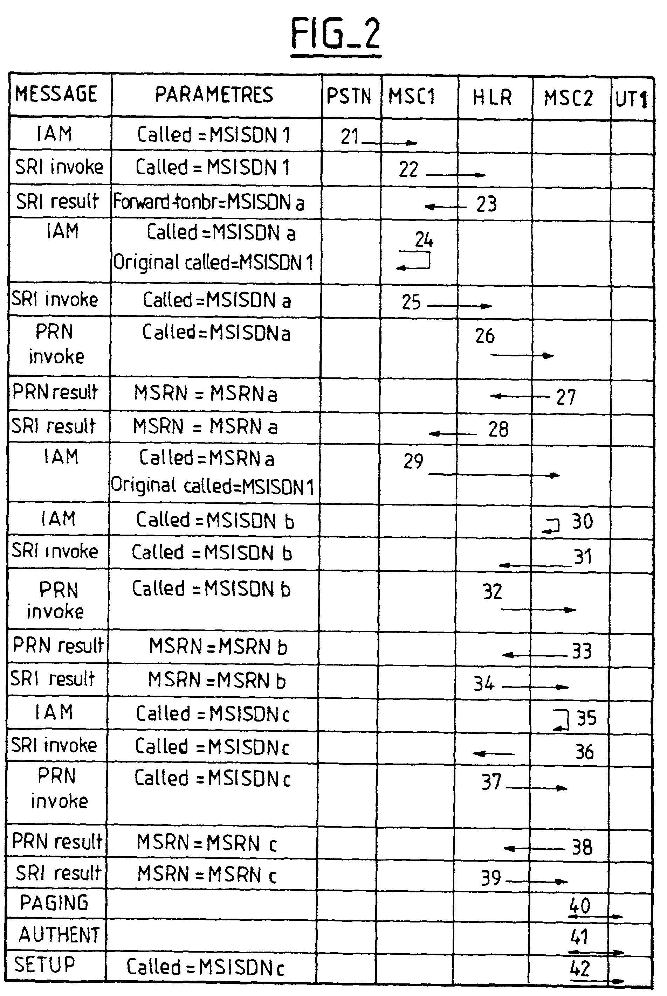

La **figure 2** représente un diagramme temporel illustrant un procédé pour coordonner et optimiser l'utilisation d'une pluralité de terminaux radiotéléphoniques fixes, en utilisant un dispositif classique de renvoi conditionnel, dans l'exemple de réseau représenté sur la figure 1. Ce procédé consiste renvoyer un appel successivement vers chacun de ces terminaux radiotéléphoniques RTa, RTb, RTc, jusqu'à ce qu'on en trouve un qui soit disponible. Le dispositif de renvoi conditionnel d'un appel destiné à un terminal radiotéléphonique est constitué essentiellement d'un programme exécuté par un ordinateur commandant le commutateur du service mobile, MSC2, qui dessert les terminaux radiotéléphoniques fixes RTa, RTb, RTc. Le dispositif classique de renvoi renvoie cet appel sur un numéro d'annuaire MSISDN (Mobile station's ISDN directory number) foumi par l'enregistreur de localisation nominale, HLR. Les différentes étapes réalisées sont :
21) Un usager du réseau fixe PSTN décroche le combiné d'un terminal UT0 et compose le numéro d'annuaire du terminal UT1 situé dans la communauté isolée IC. Comme le numéro d'annuaire est un numéro du réseau mobile PLMN, un centre de rattachement (non représenté) du terminal UT0 envoie, à un centre MSC1 de commutation du service radio mobile, un message référencé IAM (Initial Address Message) demandant l'établissement d'un communication entre le terminal UT1 et le terminal UT0 en désignant le terminal UT1 par son numéro d'annuaire MSISDN1. Ce centre MSC1 joue seulement le rôle de point d'accès au réseau PLMN, vis à vis du terminal UT0.
22) Le centre MSC1 envoie un message de demande d'information de routage référencé SRI (Send Routing Information), à l'enregistreur de localisation nominale, HLR, du réseau PLMN.
23) L'enregistreur HLR répond au centre MSC1 par un message lui commandant d'acheminer l'appel vers le terminal radio RTa, en désignant celui-ci, par son numéro d'annuaire MSISDNa.
24) Le centre MSC1 renvoie alors l'appel en envoyant à lui-même un message IAM (Initial Address Message) demandant l'établissement d'une communication avec le terminal radiotéléphonique RTa, en le désignant par son numéro d'annuaire MSISDNa. D'autre part, il place dans un champ, appelé « ORIGINAL CALLED NUMBER » , de ce message, le numéro d'annuaire MSISDN1 désignant le terminal UT1 qui est appelé, afin de permettre une sélection directe à l'arrivée de l'appel dans le commutateur SW.
25) Le centre MSC1 envoie donc un message à l'enregistreur de localisation nominale HLR, un message, référencé SRI invoke, de demande d'information de routage.
26) L'enregistreur HLR envoie alors un message demandant un numéro de passage au centre MSC2 de commutation du service mobile, parce que c'est le centre qui dessert le terminal dont le numéro d'annuaire est MSISDNa.
27) Le centre MSC2 répond à l'enregistreur HLR par un message référencé PRN result qui contient un numéro de passage MSRNa correspondant au numéro d'annuaire MSISDNa. Ce numéro de passage permet d'établir une communication téléphonique avec le terminal RTa.
28) L'enregistreur HLR envoie un message, référencé SRI result, contenant des informations de routage constituées par le numéro de passage MSRNa.
29) Le centre MSC1 envoie donc un message IAM de demande d'adresse initiale au centre MSC2, ce message contenant le numéro de passage MSRNa et le numéro initialement appelé, MSISDN1.
30) Le centre MSC2 constate que le terminal radiotéléphonique RTa, qui doit être appelé, est occupé. Il effectue alors un renvoi conditionnel classique, en direction du numéro d'annuaire du terminal radiotéléphonique RTb.
31) Il envoie à l'enregistreur HLR un message de demande d'information de routage, ce message contenant le numéro d'annuaire du terminal radiotéléphonique RTb.
32) L'enregistreur HLR envoie au centre MSC2 un message demandant un numéro de passage correspondant au numéro d'annuaire MSISDNb du terminal radiotéléphonique RTb.
33) L'enregistreur VLR du centre MSC2 répond au HLR par un message contenant le numéro de passage MSRNb correspondant au numéro d'annuaire du terminal radiotéléphonique RTb.
34) L'enregistreur HLR envoie au centre MSC2 un message contenant des informations de routage correspondant au numéro de passage MSRNb ;
35) Le centre MSC2 constate que le terminal radiotéléphonique RTb, qui doit être appelé, est occupé. Il effectue alors un renvoi conditionnel classique, en direction du numéro d'annuaire du terminal radiotéléphonique RTc.
36) Il envoie à l'enregistreur HLR un message de demande d'information de routage, ce message contenant le numéro d'annuaire du terminal radiotéléphonique RTc.
37) L'enregistreur HLR envoie au centre MSC2 un message demandant un numéro de passage MSRNc correspondant au numéro d'annuaire MSISDNc du terminal radiotéléphonique RTc.
38) L'enregistreur VLR du centre MSC2 répond au HLR par un message contenant le numéro de passage MSRNc correspondant au numéro d'annuaire du terminal radiotéléphonique RTc.
39) L'enregistreur HLR envoie au centre MSC2 un message contenant des informations de routage correspondant au numéro de passage MSRNc.
40) Le centre MSC2 recherche le terminal RTc (opération dite de "PAGING").
41) Le centre MSC2 authentifie le terminal RTc.
42) Le centre MSC2 établit une communication téléphonique avec le terminal d'utilisateur UT1, en lui envoyant un message appelé SETUP.

Il est à remarquer que le centre MSC2 ne sait pas fournir, au terminal radio utilisé, l'identité du terminal d'usager qui est appelé.

Si les abonnements des terminaux UT1,..., UT100 sont du type "abonné fixe" et dépendent d'un commutateur local du réseau téléphonique classique PSTN, les fonctions décrites ci-dessus qui sont remplies par le centre MSC2 sont remplies par ce centre de commutation local du réseau téléphonique classique PSTN.

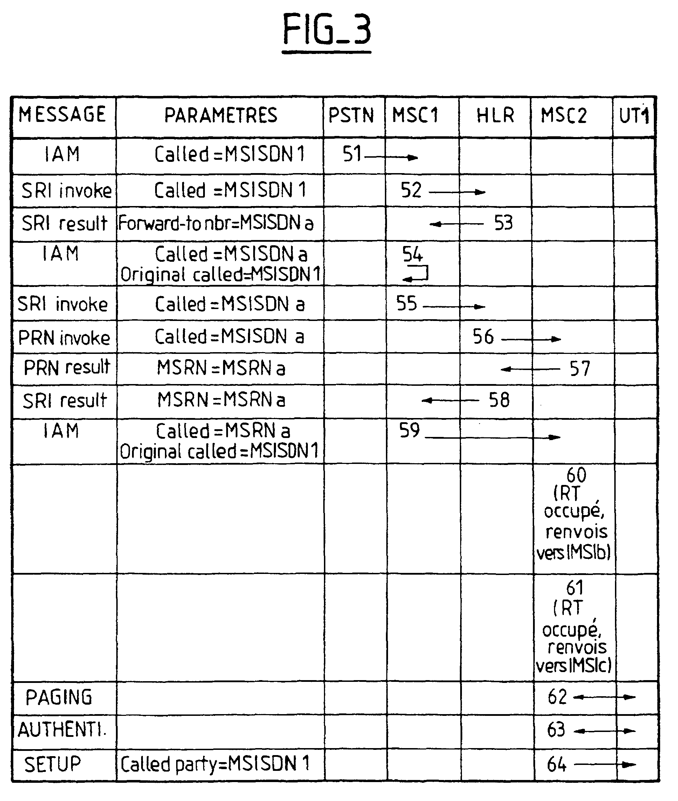

La **figure 3** représente un diagramme temporel illustrant un procédé pour coordonner et optimiser l'utilisation d'une pluralité de terminaux radiotéléphoniques fixes, en utilisant le dispositif selon l'invention, dans l'exemple de réseau représenté sur la figure 1. Ce procédé consiste, comme le précédent, à renvoyer un appel successivement vers chacun des terminaux radiotéléphoniques RTa, RTb, RTc, d'une liste prédéterminée, jusqu'à ce qu'on en trouve un qui soit disponible. Mais il n'utilise pas le dispositif classique de renvoi conditionnel, si le premier terminal, RTa, de la liste est occupé. Pour renvoyer l'appel vers le second terminal, RTb, de la liste, le dispositif selon l'invention renvoie cet appel sur un numéro international d'abonné mobile, IMSlb (International mobile subscriber identity), désignant ce second terminal radiotéléphonique, RTb, ce numéro étant fourni par l'enregistreur de localisation de visiteur, VLR. Le dispositif selon l'invention est constitué de préférence, et essentiellement, d'un programme exécuté par un ordinateur commandant le commutateur du service mobile, MSC2, qui dessert les terminaux radiotéléphoniques fixes RTa, RTb, RTc. Dans l'exemple considéré, les différentes étapes réalisées sont :
51) Un usager du réseau fixe PSTN décroche le combiné d'un terminal UT0 et compose le numéro d'annuaire du terminal UT1 situé dans la communauté isolée IC. Comme le numéro d'annuaire est un numéro du réseau mobile PLMN, un centre de rattachement (non représenté) du terminal UT0 envoie, à un centre MSC1 de commutation du service radio mobile, un message référencé IAM (Initial Address Message) demandant l'établissement d'un communication avec le terminal UT0 en désignant le terminal UT1 par son numéro d'annuaire MSISDN1. Ce centre MSC1 joue seulement le rôle de point d'accès au réseau PLMN, vis à vis du terminal UT0.
52) Le centre MSC1 envoie un message de demande d'information de routage référencé SRI (Send Routing Information), à l'enregistreur de localisation nominale, HLR, du réseau PLMN.
53) L'enregistreur HLR répond au centre MSC1 par un message lui commandant d'acheminer l'appel vers le terminal radio RTa, en désignant celui-ci, par son numéro d'annuaire MSISDNa.
54) Le centre MSC1 renvoie alors l'appel en envoyant à lui-même un message IAM (Initial Address Message) demandant l'établissement d'une communication avec le terminal radiotéléphonique RTa, en le désignant par son numéro d'annuaire MSISDNa. D'autre part, il place dans un champ, appelé "ORIGINAL CALLED NUMBER", de ce message, le numéro d'annuaire MSISDN1 désignant le terminal UT1 qui est appelé, afin de permettre une sélection directe à l'arrivée de l'appel dans le commutateur SW.
55) Le centre MSC1 envoie donc un message à l'enregistreur de localisation nominale HLR, un message, référencé SRI invoke, de demande d'information de routage.
56) L'enregistreur HLR envoie alors un message demandant un numéro de passage au centre MSC2 de commutation du service mobile, parce que c'est le centre qui dessert le terminal dont le numéro d'annuaire est MSISDNa.
57) Le centre MSC2 répond à l'enregistreur HLR par un message référencé PRN result qui contient un numéro de passage MSRNa correspondant au numéro d'annuaire MSISDNa. Ce numéro de passage permet d'établir une communication téléphonique avec le terminal RTa.
58) L'enregistreur HLR envoie un message, référencé SRI result, contenant des informations de routage constituées par le numéro de passage MSRNa.
59) Le centre MSC1 envoie donc un message IAM de demande d'adresse initiale au centre MSC2, ce message contenant le numéro de passage MSRNa et le numéro initialement appelé, MSISDN1.
60) Dans cet exemple, le centre MSC2 constate que le terminal RTa désigné par le numéro de passage MSRNa est occupé. Conformément à l'invention, il renvoie cet appel vers le numéro IMSlb, sans faire intervenir l'enregistreur HLR de localisation nominale. Il renvoie sur le terminal RTb car le numéro IMSlb est le premier dans une liste prédéterminée : IMSlb, IMSlc, de numéros internationaux d'abonné mobile qui désignent les terminaux RTb, RTc pouvant desservir le terminal UT1 demandé lorsque le terminal RTa est occupé. Cette liste correspond à chacun des numéros d'annuaire MSISDN1, ...., MSISDN100 des terminaux UT1, ..., UT100, dans l'enregistreur de localisation de visiteur, VLR, qui est dans le centre MSC2.
61) Dans cet exemple, le centre MSC2 constate que le terminal RTb désigné par le numéro IMSlb est occupé, lui aussi. Conformément à l'invention, il renvoie cet appel vers le numéro IMSlc sans faire intervenir l'enregistreur HLR de localisation nominale. Il renvoie sur le terminal RTc car le numéro IMSlc est le numéro qui suit IMSIb dans une liste prédéterminée : IMSIb, IMSIc, de numéros internationaux d'abonné mobile qui désignent les terminaux RTb, RTc pouvant desservir les terminaux UT1,..., UT100 lorsque le terminal RTa est occupé.
62) Dans cet exemple, le centre MSC2 constate que le terminal RTc désigné par le numéro IMSlc est libre. Il émet un message de recherche ("PAGING") du terminal RTc.
63) Le centre MSC2 authentifie le terminal RTc.
64) Le centre MSC2 envoie au terminal RTc un message référencé SETUP, destiné commutateur SW, ce message contenant le numéro initialement demandé MSISDN1. Ce numéro est utilisé par le commutateur SW pour établir une connexion jusqu'au terminal demandé UT1.

Si les abonnement des terminaux UT1,..., UT100 sont du type "abonné fixe" et dépendent d'un commutateur local du réseau téléphonique classique PSTN, les fonctions décrites ci-dessus qui sont remplies par le centre MSC1 sont remplies par ce centre de commutation local du réseau téléphonique classique PSTN.

## Revendications

1. Dispositif pour relier un commutateur téléphonique local (SW) à un réseau téléphonique fixe (PSTN) via un réseau radiotéléphonique (PLMN) qui comporte un centre de commutation du service mobile (MSC2) et un enregistreur de localisation de visiteur (VLR) qui est associé à ce centre ce dispositif comportant une pluralité de terminaux radiotéléphoniques fixes (RTa,...,RTc) pour relier ce commutateur téléphonique local (SW) au réseau radiotéléphonique (PLMN) ; et une pluralité de terminaux d'usager (UT1,..., UT100) étant reliée à ce commutateur téléphonique ;
**caractérisé en ce qu'**il comporte :
- des moyens (MSC1, HLR) pour renvoyer un appel (52, 53), destiné à l'un de ces terminaux d'usager (UT1,..., UT100) et contenant le numéro d'annuaire (MSISDN1) du terminal d'usager (UT1) qui est appelé, vers un centre de commutation du service mobile (MSC2) permettant d'accéder au terminal d'usager (UT1) qui est appelé, l'appel renvoyé contenant un numéro d'annuaire (MSISDNa) désignant un premier terminal radiotéléphonique fixe (RTa) associé au numéro d'annuaire du terminal d'usager demandé; et des moyens situés dans ce centre (MSC2) pour :
-- si ce premier terminal (RTa) est occupé, renvoyer cet appel vers un deuxième terminal radio fixe (RTb) désigné par son numéro international d'abonné mobile (IMSlb), ce numéro étant associé au numéro d'annuaire du terminal d'usager demandé, dans l'enregistreur de localisation de visiteur (VLR) qui est associé à ce centre ;
-- et si ce deuxième terminal (RTb) est occupé, renvoyer cet appel vers un troisième terminal radio fixe (RTc) désigné par son numéro international d'abonné mobile (IMSIc), ce numéro étant associé au numéro d'annuaire du terminal d'usager demandé, dans l'enregistreur de localisation de visiteur (VLR) qui est associé à ce centre ; jusqu'à trouver un terminal radio fixe qui est disponible, s'il y en a un.

2. Dispositif selon la revendication 1, **caractérisé en ce que** les moyens (MSC1, HLR), pour renvoyer un appel (52, 53), destiné à l'un de ces terminaux d'usager (UT1) comportent des moyens (MSC1) pour envoyer (54), au centre de commutation du service mobile (MSC2), un message appelé IAM contenant le numéro d'annuaire (MSISDN1) du terminal d'usager qui est appelé ;
**en ce que** le centre de commutation du service mobile (MSC2) comporte en outre des moyens pour fournir ce numéro d'annuaire au terminal radiotéléphonique dans un message appelé SETUP ;
et **en ce que** chacun desdits terminaux radiotéléphoniques fixes (RTa, RTb, RTc) comporte des moyens pour extraire du message SETUP, reçu pour l'établissement de chaque appel, le numéro d'annuaire du terminal d'usager (UT1) qui est appelé, et pour envoyer ce numéro au commutateur (SW) sous la forme d'un message de signalisation classique.

## Patentansprüche

1. Vorrichtung zum Verbinden einer lokalen Telefonvermittlung (SW) mit einem festen Telefonnetz (PSTN) über ein Funktelefonnetz (PLMN), das eine Mobilfunkdienst-Vermittlungszentrale (MSC2) und ein dieser Zentrale zugeordnetes Besucherverzeichnis (VLR) beinhaltet,
wobei diese Vorrichtung mehrere ortsfeste Funktelefonendgeräte (RTa, ... RTc) zum Verbinden dieser lokalen Telefonvermittlung (SW) mit dem Funktelefonnetz (PLMN) sowie mehrere Teilnehmerendgeräte (UT1, ... UT100) beinhaltet, die mit dieser Telefonvermittlung verbunden sind,
**dadurch gekennzeichnet, daß** es folgendes beinhaltet:
- Mittel (MSC1, HLR) zum Weiterleiten eines Anrufs, der für eines dieser Teilnehmerendgeräte (UT1, ...UT100) bestimmt ist und die Telefonverzeichnisnummer (MSISDN1) des angerufenen Teilnehmerendgeräts (UT1) enthält, an eine Mobilfunkdienst-Vermittlungszentrale (MSC2), welche den Zugriff auf das angerufene Teilnehmerendgerät (UT1) gestattet, wobei der weitergeleitete Anruf eine Telefonverzeichnisnummer (MSISDNa) enthält, die ein erstes ortsfestes Funktelefonendgerät (RTa) angibt, welches der Telefonverzeichnisnummer des gewünschten Teilnehmers zugewiesen ist, sowie Mittel, die in dieser Zentrale (MSC2) angeordnet sind und dazu dienen,
-- diesen Anruf, wenn dieses erste Endgerät (RTa) belegt ist, an ein zweites ortsfestes Funkendgerät (RTb) weiterzuleiten, das durch seine internationale Mobilfunk-Teilnehmernummer (IMSIb) angegeben ist, wobei diese Nummer in dem dieser Zentrale zugeordneten Besucherverzeichnis (VLR) der Telefonverzeichnisnummer des Endgeräts des gewünschten Teilnehmers zugewiesen ist;
-- und diesen Anruf, wenn dieses zweite Endgerät (RTb) belegt ist, an ein drittes ortsfestes Funkendgerät (RTc) weiterzuleiten, das durch seine internationale Mobilfunk-Teilnehmernummer (IMSIc) angegeben ist, wobei diese Nummer in dem dieser Zentrale zugeordneten Besucherverzeichnis (VLR) der Telefonverzeichnisnummer des Endgeräts des gewünschten Teilnehmers zugewiesen ist, bis ein verfügbares ortsfestes Funkendgerät gefunden ist, sofern ein solches existiert.

2. Vorrichtung gemäß Anspruch 1, **dadurch gekennzeichnet, daß** die Mittel (MSC1, HLR) zum Weiterleiten eines Anrufs (52, 53), der für eines dieser Teilnehmerendgeräte (UT1) bestimmt ist, Mittel (MSC1) beinhalten, um an die Mobilfunkdienst-Vermittlungszentrale (MSC2) eine als IAM bezeichnete Meldung zu schicken (54), welche die Telefonverzeichnisnummer (MSISDN1) des angerufenen Teilnehmerendgeräts enthält,
ferner **dadurch**, daß die Mobilfunkdienst-Vermittlungszentrale (MSC2) außerdem Mittel beinhaltet, um diese Telefonverzeichnisnummer in einer als SETUP bezeichneten Meldung zu liefern,
sowie **dadurch**, daß jede der besagten ortsfesten Funktelefonendgeräte (RTa, RTb, RTc) Mittel beinhaltet, um aus der SETUP-Meldung, die zum Herstellen jedes einzelnen Anrufs empfangen wurde, die Telefonverzeichnisnummer des angerufenen Teilnehmerendgeräts (UT1) zu extrahieren und diese Nummer in Form einer klassischen Signalisierungsmeldung an die Vermittlung (SW) zu senden.

## Claims

1. A system for connecting a local telephone switch (SW) to a fixed telephone network (PSTN) via a radiotelephone network (PLMN) which includes a mobile service switching center (MSC2) and a visitor location register (VLR) associated with said center,
the system including a plurality of fixed radiotelephone terminals (RTa, ..., RTc) for connecting the local telephone switch (SW) to the radiotelephone network (PLMN), and a plurality of user terminals (UT1, ..., UT100) connected to said telephone switch, the system being **characterized in that** it comprises:
· call forwarding means (MSC1, HLR) for forwarding a call (52, 53) addressed to one of the user terminals (UT1, ..., UT100) and containing the directory number (MSISDN1) of the called user terminal (UT1) to a mobile service switching center (MSC2) providing access to the called user terminal (UT1), the forwarded call containing a directory number (MSISDNa) designating a first fixed radiotelephone terminal (RTa) associated with the directory number of the called user terminal; and
· means situated in said center (MSC2) to act as follows:
· if said first terminal (RTa) is busy, to forward said call to a second fixed radiotelephone terminal (RTb) designated by its international mobile subscriber identity number (IMSIb), said number being associated with the directory number of the called user terminal in the visitor location register (VLR) associated with said center; and
· if said second terminal (RTb) is busy, to forward said call to a third fixed radiotelephone terminal (RTc) designated by its international mobile subscriber identity number (IMSIc), said number being associated with the directory number of the called user terminal in the visitor location register (VLR) associated with said center; until an available fixed radiotelephone terminal is found, if any.

2. A system according to claim 1, **characterized in that** the call forwarding means (MSC1, HLR) for forwarding a call (52, 53) addressed to one of the user terminals (UT1) include means (MSC1) for sending (54) to the mobile service switching center (MSC2) an IAM message containing the directory number (MSISDN1) of the called user terminal;
**in that** the mobile service switching center (MSC2) further includes means for supplying said directory number to the radiotelephone terminal in a SETUP message; and
**in that** each of said fixed radiotelephone terminals (RTa, RTb, and RTc) includes means for extracting the directory number of the called user terminal (UT1) from the SETUP message received for setting up each call, and means for sending said number to the switch (SW) in the form of a conventional signalling message.
